# EUROPEAN PATENT APPLICATION

(11) **EP 2 706 450 A2**
(43) Date of publication of application: **12.03.2014**
(21) Application number: 13182991.3
(22) Date of filing: 04.09.2013
(51) Int. Cl.: G06F 3/0488

(54) **Apparatus and method for editing an image in a portable terminal**

(30) Priority: 05.09.2012 KR 20120098255
(71) Applicant: Samsung Electronics Co., Ltd, Gyeonggi-do 443-742 (KR); Seoul National University R&DB Foundation, Seoul 151-742 (KR)
(72) Inventor: Nam, Hoon-Gon, 443-742 Gyeonggi-do (KR); Kim, Myung-Soo, 443-742 Gyeonggi-do (KR); Kim, Hyun-Joon, 443-742 Gyeonggi-do (KR); Park, Yong-Woon, 443-742 Gyeonggi-do (KR); Yang, Chul-Woo, 443-742 Gyeonggi-do (KR); Lee, Jee-Man, 443-742 Gyeonggi-do (KR); Baek, Chang Hoon, 151-742 Seoul (KR)
(74) Representative: Nederlandsch Octrooibureau

(57) **Abstract**

An apparatus and a method edit an image in a portable terminal, with the method including displaying one or more icons indicating stylus pen functions; when a highlighter icon corresponding to a highlighter function is selected among the displayed icons, displaying a text selected by a stylus pen in an image in a preset fluorescent color; and storing the displayed text in accordance with the fluorescent color.

## Description

### BACKGROUND OF THE INVENTION

### 1. Field of the Invention

The present invention relates generally to a portable terminal, and more particularly, to an apparatus and a method for editing an image in a portable terminal.

### 2. Description of the Related Art

In the prior art, portable terminals such as a smart phone, a tablet and the like provide many useful functions to users through a plurality of various applications. Accordingly, the portable terminal is being changed to a device capable of using various types of information as well as a voice communication function through the provision of the various functions.

In particular, a portable terminal supporting a stylus pen function can execute the stylus pen function by detecting a press of a button included in the stylus pen or detecting a press of a screen for a predetermined time. However, an operation for executing the stylus pen function makes the user feel cumbersomeness in activating the stylus pen function.

### SUMMARY OF THE INVENTION

Accordingly, the present invention provides an apparatus and a method for easily activating a stylus pen function.

Also, the present invention provides an apparatus and a method for easily using the stylus pen function.

In accordance with an aspect of the present invention, an apparatus for editing an image in a portable terminal is provided. The apparatus includes a memory unit; a display unit; and a controller for displaying one or more icons indicating stylus pen functions in the display unit, displaying a text selected by a stylus pen in an image in a preset fluorescent color when a highlighter icon corresponding to a highlighter function is selected, and storing the displayed text in the memory unit in accordance with the fluorescent color.

In accordance with another aspect of the present invention, a method of editing an image in a portable terminal is provided. The method includes displaying one or more icons indicating stylus pen functions; when a highlighter icon corresponding to a highlighter function is selected among the displayed icons, displaying a text selected by a stylus pen in an image in a preset fluorescent color; and storing the displayed text in accordance with the fluorescent color.

According to the present invention, it is possible to easily activate stylus pen functions by displaying icons corresponding to the stylus pen functions on a screen.

Also, it is possible to easily use the stylus pen functions by displaying the icons corresponding to the stylus pen functions on the screen.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a portable terminal according to an exemplary embodiment of the present invention;
FIG. 2 is a flowchart of performing a stylus pen function in the portable terminal according to the exemplary embodiment of the present invention;
FIG. 3 is a flowchart of performing a highlighter function in the portable terminal according to the exemplary embodiment of the present invention;
FIG. 4 is a flowchart of performing a colored pencil function in the portable terminal according to the exemplary embodiment of the present invention;
FIG. 5 is a flowchart of performing a capture function in the portable terminal according to the exemplary embodiment of the present invention;
FIG. 6 is a flowchart of performing a reset function in the portable terminal according to the exemplary embodiment of the present invention;
FIG. 7 illustrates a screen displaying a stylus pen function by using an icon in the portable terminal according to the exemplary embodiment of the present invention;
FIG. 8 illustrates screens in which a highlighter function is performed in the portable terminal according to the exemplary embodiment of the present invention;
FIG. 9 illustrates screens in which a colored pencil function is performed in the portable terminal according to the exemplary embodiment of the present invention;
FIG. 10 illustrates screens in which a capture function is performed in the portable terminal according to the exemplary embodiment of the present invention; and
FIG. 11 illustrates screens in which a reset function is performed in the portable terminal according to the exemplary embodiment of the present invention.

### DETAILED DESCRIPTION OF THE INVENTION

Hereinafter, various embodiments of the present invention will be described with reference to the accompanying drawings. In the following description, a detailed description of known functions and configurations incorporated herein will be omitted when it may make the subject matter of the present invention rather unclear. The present invention may, however, be embodied in many different forms and should not be construed as limited to the exemplary embodiments set forth herein. In addition, terms described herein, which are defined with reference to the functions of the present invention, may be implemented differently depending on a user or operator's intention and practice. Therefore, the terms should be understood on the basis of the disclosure throughout the specification. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among the terms set forth herein, data refers to any kind of information processed by the device, including text and/or images received from any external entities, messages transmitted or received, and information created when a specific function is executed by the device.

A portable terminal according to an exemplary embodiment of the present invention is a movable and/or mobile electronic device which is easily carried, and may include a video telephone, a mobile phone, a smart phone, an International Mobile Telecommunication 2000 (IMT-2000) terminal, a WCDMA terminal, a Universal Mobile Telecommunication Service (UMTS) terminal, a Personal Digital Assistant (PDA), a Portable Multimedia Player (PMP), a Digital Multimedia Broadcasting (DMB) terminal, an E-Book, portable computers (a notebook, a tablet and the like), a digital camera or the like.

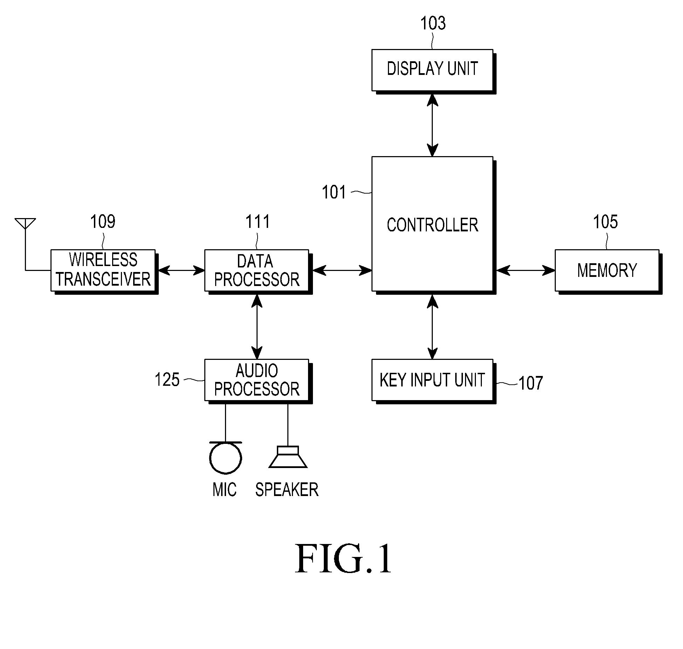

Referring to FIG. 1, the portable terminal includes a controller 101, a display unit 103, a memory unit 105, an input unit 107 which may be a key input unit having at least one key, a wireless transceiver 109, a data processor 111, and an audio processor 125 which may be connected to a microphone (MIC) and/or a speaker.

Referring to each component, the wireless transceiver 109 performs a wireless communication function of the portable terminal. In greater detail, the wireless transceiver 109 includes a wireless transmitter for up-converting and amplifying a frequency of a transmitted signal, and a wireless receiver for low noise-amplifying a received signal and down-converting a frequency and the like. Further, the data processor 111 includes a transmitter for encoding and modulating the transmitted signal, and a receiver for demodulating and decoding the received signal and the like. Here, the data processor 111 may be configured to include a modem and a codec, and the codec may include a data codec for processing packet data and the like, and an audio codec for processing an audio signal such as a voice.

Further, the audio processor 125 performs a function of reproducing a reception audio signal output from the data processor 111 through the speaker or transmitting a transmission audio signal generated from the microphone to the data processor 111. In addition, the input unit 107 includes keys for inputting number and character information, and function keys for setting various functions. The display unit 103 displays an image signal on a screen and displays data of which an output is requested by the controller 101. When the display unit 103 is implemented to have a touch screen in a touch display screen type such as a capacitive type, a resistive type or the like, the input unit 107 may include only a minimum of preset keys, and the display unit 103 may replace some of the key input functions of the input unit 107.

Further, the memory unit 105 includes a program memory and a data memory. Here, the program memory stores a booting system and an operating system (hereinafter, referred to as an "OS") for controlling a general operation of the portable terminal, and the data memory stores various data generated during the operation of the portable terminal. In particular, when a highlighter function of the stylus pen functions is performed, the memory unit 105 stores a text displayed with a highlighter within an image in accordance with a color of the highlighter. Further, when a colored pencil function of the stylus pen functions is performed, the memory unit 105 stores an image with a marked trace. Here, the trace refers to a motion of the stylus pen marked in the image. In addition, when a capture function of the stylus pen functions is performed, the memory unit 105 stores an area captured in the image.

Here, the stylus pen functions include the highlighter function, the colored pencil function, the capture function, and the reset function. The highlighter function refers to a function marking a text existing in a motion trace of the stylus pen among texts included in the image in a color of the highlighter. The colored pencil function refers to a function of marking the motion trace of the stylus pen within the image in a preset color of the colored pencil. The capture function refers to a function of capturing a part of an area of the image included in an area generated by the motion trace of the stylus pen within the image and storing the part of the areas. The reset function refers to a function of initializing a currently executed function among the highlighter function, the colored pencil function, and the capture function.

In addition, the controller 101 performs a function of controlling a general operation of the portable terminal. In particular, when a stylus pen function activation condition is satisfied, the controller 101 displays icons corresponding to the stylus pen functions on a screen. At this time, the controller 101 may display the icons on a notification bar. Here, the stylus pen function activation condition includes a case where an image display event is generated or a stylus pen application is executed. The image display event includes a case where a web browser application is executed, an image viewer application is executed, or an electronic book (e-book) application is executed. Further, the stylus pen application refers to an application for activating the stylus pen functions.

Furthermore, the controller 101 displays icons corresponding to the stylus pen functions. At this time, the controller 101 displays icons corresponding to the highlighter function, the colored pencil function, the capture function, and the reset function on the screen. Further, the controller 101 identifies whether the icon corresponding to the highlighter function (hereinafter, referred to as a "highlighter icon") is selected among the displayed icons. When the highlighter icon is selected, the controller 101 executes the highlighter function.

In greater detail, the controller 101 identifies whether the stylus pen comes into contact with the text included in the image. When the stylus pen comes into contact with the text, the controller 101 marks the contacted text with a preset fluorescent color. Although the colors used by the present invention may be fluorescent colors, it is to be understood that any colors and combinations of colors, hues, tints, and shading, such as pastels, plaids, color patterns, and even just black-and-white or black-gray-and-white may be used instead of or in addition to fluorescent colors. When an input or command is received to store the text marked in the fluorescent color, the controller 101 copies the text marked in the fluorescent color and stores the copied text marked in the highlighter color; that is, with an indicator in the memory unit 105 which specifies the highlighter color and which is associated with the stored copied text in the memory unit 105. For example, when the highlighter color is red, the controller 101 may store the text marked in red; that is, with an indicator in the memory unit 105 which specifies the color red and which is associated with the stored text in the memory unit 105.

When the stylus pen does not come into contact with the text, the controller 101 identifies whether the highlighter icon is selected. When the highlighter icon is selected, the controller 101 changes a currently set fluorescent color to another fluorescent color according to a preset order. For example, when the preset order corresponds to red, orange, yellow, and green and the currently set fluorescent color is red, the controller 101 may change the highlighter color from red into orange.

Further, the controller 101 identifies whether the icon corresponding to the colored pencil (hereinafter, referred to as a "colored pencil icon") is selected among the displayed icons. When the colored pencil icon is selected, the controller 101 executes the colored pencil function.

In greater detail, the controller 101 identifies whether the stylus pen comes into contact with the image. When the stylus pen comes into contact with the image, the controller 101 marks a motion trace of the stylus pen on the image in a set colored pencil color. When it is requested to store the image with the motion trace of the stylus pen, the controller 101 stores the image with the marked motion trace. At this time, the controller 101 may store the image with the motion trace marked in the colored pencil color; that is, with an indicator in the memory unit 105 which specifies the colored pencil color and which is associated with the stored image in the memory unit 105. For example, when the colored pencil color is red, the controller 101 may store the image with the motion trace marked in red; that is, with an indicator in the memory unit 105 which specifies the color red and which is associated with the stored image in the memory unit 105.

When the stylus pen does not come into contact with the image, the controller 101 identifies whether the colored pencil icon is selected. When the colored pencil icon is selected, the controller 101 changes a currently set colored pencil color to another colored pencil color according to a preset order. For example, when the preset order corresponds to red, orange, yellow, and green and the currently set colored pencil color is red, the controller 101 may change the colored pencil color from red into orange.

Further, the controller 101 identifies whether the icon corresponding to the capture function (hereinafter, referred to as a "capture icon") is selected among the displayed icons. When the capture icon is selected, the controller 101 executes the capture function.

In greater detail, the controller 101 identifies a currently set capture mode. Here, the capture mode includes a rectangle capture mode of forming a capture area in a rectangular form, and a free capture mode of freely forming the capture area based on user inputs and/or motion of a stylus through the input unit 107. For example, the controller 101 identifies whether the currently set capture mode is the rectangle capture mode, a circle capture mode, or the free capture mode.

Further, the controller 101 identifies, by using the stylus pen, whether the capture area is generated on the image. At this time, the controller 101 stores the capture area by using the identified capture mode. For example, when the identified capture mode is the rectangle capture mode, the controller 101 may generate the capture area on the image with a rectangular shape. In another example, when the identified capture mode is the free capture mode, the controller 101 may generate the capture area according to a motion pattern of the stylus pen on the image. When the capture area is generated, the controller 101 stores an image included in the capture area.

When the capture area is not generated, the controller 101 identifies whether the capture icon is selected. When the capture icon is selected, the controller 101 changes the capture mode according to a preset order. For example, when the preset order corresponds to the rectangle capture mode, the circle capture mode, and the free capture mode, and when a currently set capture mode is the rectangle capture mode, the controller 101 may change the rectangle capture mode into the circle capture mode.

Further, the controller 101 identifies whether the icon corresponding to the reset function (hereinafter, referred to as a "reset icon") is selected among the displayed icons. When the reset icon is selected, the controller 101 executes the reset function.

In greater detail, the controller 101 identifies a currently executed stylus pen function among the highlighter function, the colored pencil function, and the capture function. For example, when the currently executed stylus pen function is the capture function, the controller 101 may identify that the currently executed stylus pen function is the capture function. Further, the controller 101 deletes an indication generated by the execution of the identified stylus pen function. For example, when the identified stylus pen function is the capture function, the controller 101 may delete a capture area generated for the capture from the image.

In addition, the controller 101 may initialize and then execute the identified stylus pen function. For example, when the identified stylus pen function is the capture function, the controller 101 may initialize the capture function and then continuously execute the capture function.

Further, the controller 101 identifies whether the reset icon is selected. When the reset icon is selected, the controller 101 ends the identified stylus pen function. For example, when the identified stylus pen function is the capture function, the controller 101 may end the capture function.

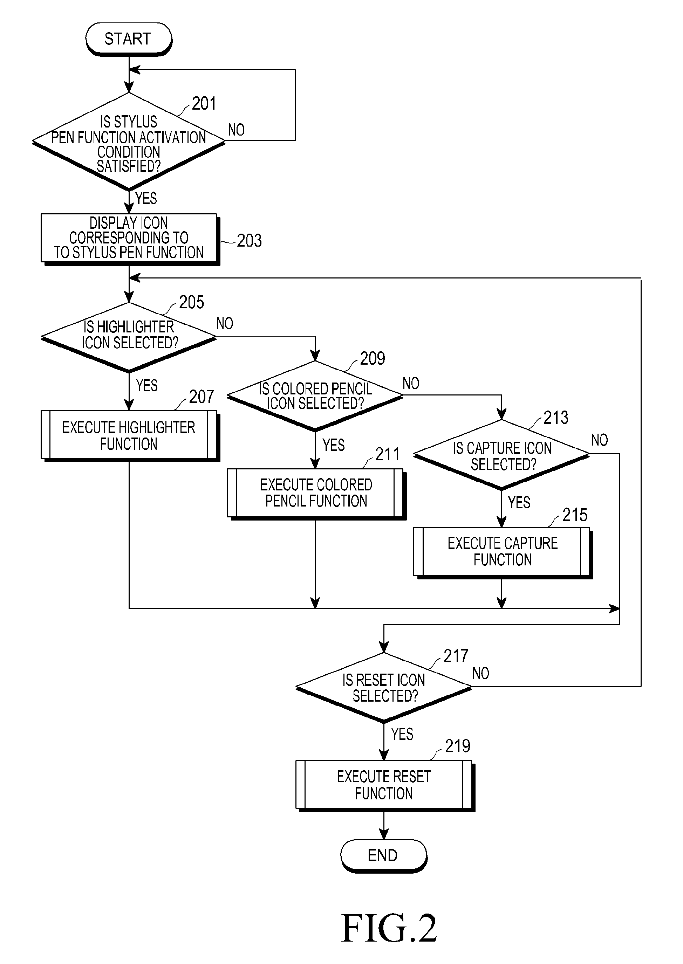

FIG. 2 is a flowchart of performing the stylus pen function in the portable terminal according to the exemplary embodiment of the present invention.

Referring to FIG. 2, in step 201, the controller 101 identifies whether a stylus pen function activation condition is satisfied. As a result of the identification, when the stylus pen function activation condition is satisfied, the controller 101 proceeds to step 203. Otherwise, the controller 101 repeatedly performs step 201.

Here, the stylus pen function activation condition includes a case where an image display event is generated or the stylus pen application is executed. The image display event includes a case where a web browser application is executed, an image viewer application is executed, or an electronic book (e-book) application is executed. Further, the stylus pen application refers to an application for activating the stylus pen functions.

In addition, the stylus pen functions include a highlighter function, a colored pencil function, a capture function, and a reset function. The highlighter function refers to a function of marking a text existing in a motion trace of the stylus pen among texts included in the image in a color of the highlighter. The colored pencil function refers to a function of marking the motion trace of the stylus pen within the image in a preset color of the colored pencil. The capture function refers to a function of capturing a part of an area of the image included in an area generated by the motion trace of the stylus pen within the image and storing the captured part of the areas. The reset function refers to a function of initializing a currently executed function among the highlighter function, the colored pencil function, and the capture function.

When performing step 203, the controller 101 displays the icon corresponding to the stylus pen function on the screen and then proceeds to step 205. At this time, the controller 101 may display icons corresponding to the highlighter function, the colored pencil function, the capture function, and the reset function on the screen.

Further, in step 205, the controller 101 identifies whether the highlighter icon is selected among the displayed icons. As a result of the identification, when the highlighter icon is selected, the controller 101 proceeds to step 207. Otherwise, the controller 101 proceeds to step 209. When performing step 207, the controller 101 executes the highlighter function and the proceeds to step 217.

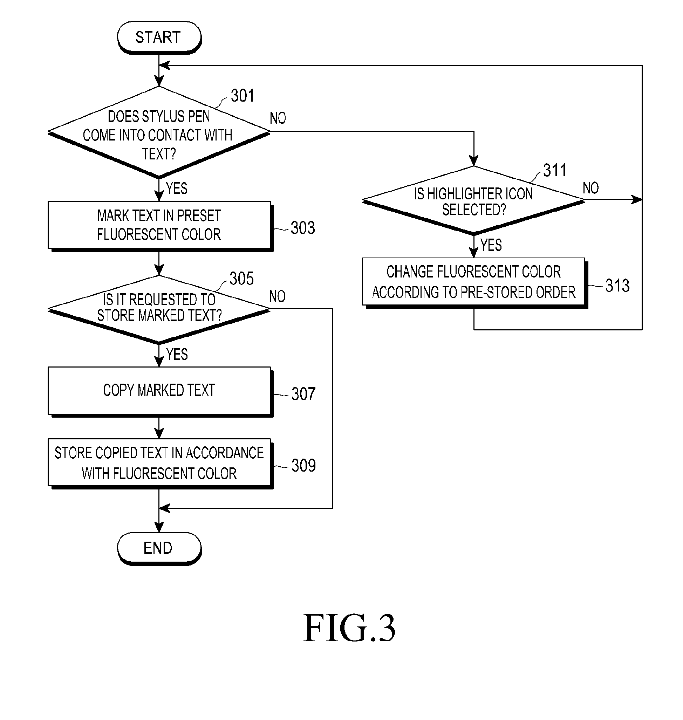

FIG. 3 is a flowchart of performing the highlighter function in the portable terminal according to the exemplary embodiment of the present invention. Hereinafter, an operation of performing the highlighter function will be described with reference to FIG. 3.

In step 301, the controller 101 identifies whether the stylus pen comes into contact with the text included in the image by the user. As a result of the identification, when the stylus pen comes into contact with the text, the controller 101 proceeds to step 303. Otherwise, the controller 101 proceeds to step 311.

When performing step 303, the controller 101 displays the contacted text with a preset fluorescent color and then proceeds to step 305. Further, in step 305, the controller 101 identifies whether the controller 101 is requested to store the text marked in the fluorescent color by the user. As a result of the identification that the controller 101 is requested to store the marked text, the controller 101 proceeds to step 307. Otherwise, the controller 101 skips steps 307-309 and ends the highlighter function.

When performing step 307, the controller 101 copies the text marked in the fluorescent color, and the controller 101 stores the copied text marked in the fluorescent color in step 309, and then ends the highlighter function. For example, when the highlighter color is red, the controller 101 may store the text marked in red; that is, with an indicator in the memory unit 105 which specifies the highlighter color and which is associated with the stored copied text in the memory unit 105.

When performing step 311, the controller 101 identifies whether the highlighter icon is selected. As a result of the identification that the highlighter icon is selected, the controller 101 proceeds to step 313. Otherwise, the controller 101 proceeds to step 301. When performing step 313, the controller 101 changes a currently set fluorescent color into another fluorescent color according to a preset order and then the proceeds to step 301. For example, when the preset order corresponds to red, orange, yellow, and green and the currently set fluorescent color is red, the controller 101 may change the higher pen color from red into orange.

Referring back to FIG. 2, in step 209, the controller 101 identifies whether the colored pencil is selected among the displayed icons. As a result of the identification that the colored pencil icon is selected, the controller 101 proceeds to step 211. Otherwise, the controller 101 proceeds to step 213.

When performing step 211, the controller 101 executes the colored pencil function and then proceeds to step 217.

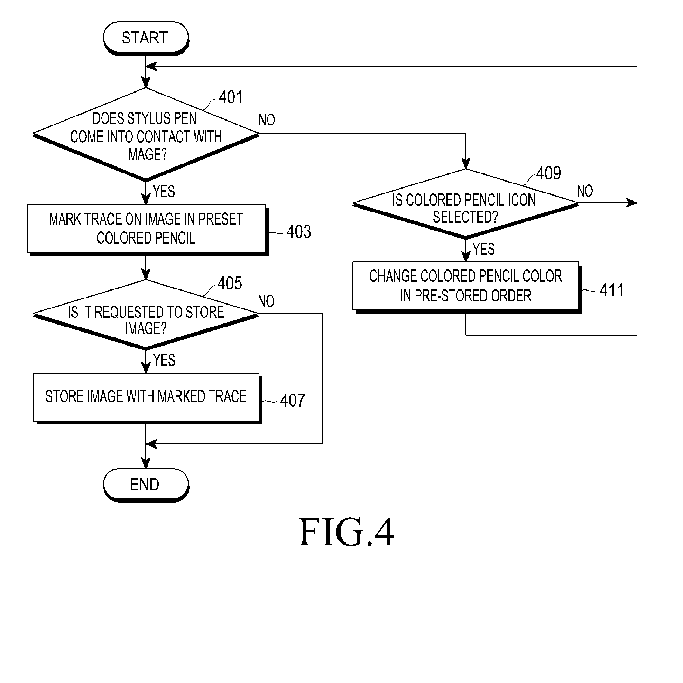

FIG. 4 is a flowchart of performing the colored pencil function in the portable terminal according to the exemplary embodiment of the present invention. Hereinafter, an operation of performing the colored pencil function by the portable terminal will be described with reference to FIG. 4.

In step 401, the controller 101 identifies whether the stylus pen comes into contact with the image by the user. As a result of the identification that the stylus pen comes into contact with the image, the controller 101 proceeds to step 403. Otherwise, the controller 101 proceeds to step 409.

When performing step 403, the controller 101 marks a motion trace of the stylus pen on the image in a preset colored pencil color and then proceeds to step 405. Further, in step 405, the controller 101 identifies whether the controller 101 is requested to store the image with the marked motion trace of the stylus pen by the user. As a result of the identification that the controller 101 is requested to store the image with the marked motion trace, the controller 101 proceeds to step 407. Otherwise, the controller 101 skips steps 405-407 and ends the colored pencil function.

When performing step 407, the controller 101 copies the image with the marked motion trace, stores the copied image, and then ends the colored pencil function. At this time, the controller 101 may store the image with the motion trace marked in the colored pencil color; that is, with an indicator in the memory unit 105 which specifies the colored pencil color and which is associated with the stored image in the memory unit 105. For example, when the colored pencil color is red, the controller 101 may store the image with the motion trace marked in red; that is, with an indicator in the memory unit 105 which specifies the color red and which is associated with the stored image in the memory unit 105.

When performing step 409, the controller 101 identifies whether the colored pencil icon is selected by the user. As a result of the identification that the colored pencil icon is selected, the controller 101 proceeds to step 411. Otherwise, the controller 101 proceeds to step 401.

When performing step 411, the controller 101 changes a currently set colored pencil color into another colored pencil color according to a preset order and then proceeds to step 401. For example, when the preset order corresponds to red, orange, yellow, and green and the currently set fluorescent color is red, the controller 101 may change the colored pencil color from red into orange.

Referring back to FIG. 2, in step 213, the controller 101 identifies whether the capture icon is selected among the displayed icons. As a result of the identification that the capture icon is selected, the controller 101 proceeds to step 215. Otherwise, the controller 101 proceeds to step 217.

When performing step 213, the controller 101 executes the capture function and then proceeds to step 217.

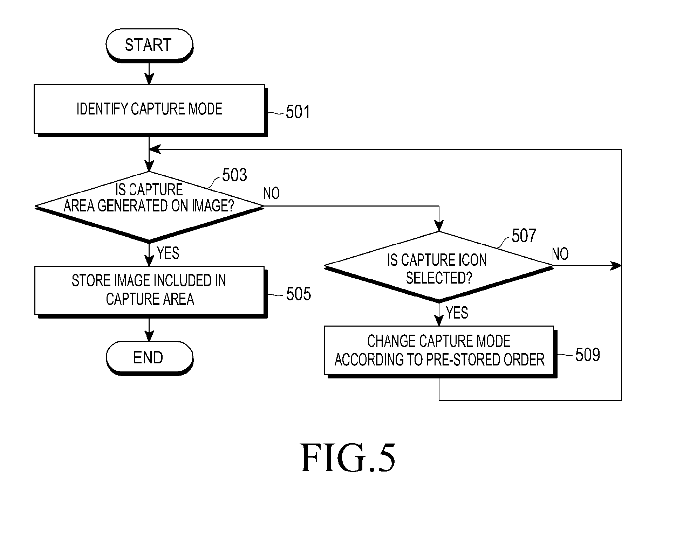

FIG. 5 is a flowchart of performing the capture function in the portable terminal according to the exemplary embodiment of the present invention. Hereinafter, an operation of performing the capture function by the portable terminal will be described with reference to FIG. 5.

In step 501, the controller 101 identifies a currently set capture mode and then proceeds to step 503. Here, the capture mode includes a rectangle capture mode for forming a capture area in a rectangular form, and a free capture mode for freely forming the capture area. For example, the controller 101 identifies whether the currently set capture mode is the rectangle capture mode, a circle capture mode, or the free capture mode.

Further, in step 503, the controller 101 identifies whether a capture area is generated on the image by using the stylus pen. As a result of the identification that the capture area is generated, the controller 101 proceeds to step 505. Otherwise, the controller 101 proceeds to step 507. At this time, the controller 101 stores the capture area by using the identified capture mode. For example, when the capture mode is a rectangle capture mode, the controller 101 may generate the capture area on the image in a rectangular form. In another example, when the identified capture mode is a free capture mode, the controller 101 may generate the capture area according to a motion pattern of the stylus pen on the image.

When performing step 505, the controller 101 copies an image included in the capture area, stores the copied image, and then ends the capture function. When performing step 507, the controller 101 identifies whether the capture icon is selected. As a result of the identification that the capture icon is selected, the controller 101 proceeds to step 509. Otherwise, the controller 101 proceeds to step 503.

When performing step 509, the controller 101 changes the capture mode according to a preset order and then proceeds to step 503. For example, when the preset order corresponds to the rectangle capture mode, a circle capture mode, and the free capture mode, and the currently set capture mode is the rectangle capture mode, the controller 101 may change the rectangle capture mode into the circle capture mode.

Referring back to FIG. 2, in step 217, the controller 101 identifies whether the reset icon is selected among the displayed icons. As a result of the identification that the reset icon is selected, the controller 101 proceeds to step 219. Otherwise, the controller 101 proceeds to step 205.

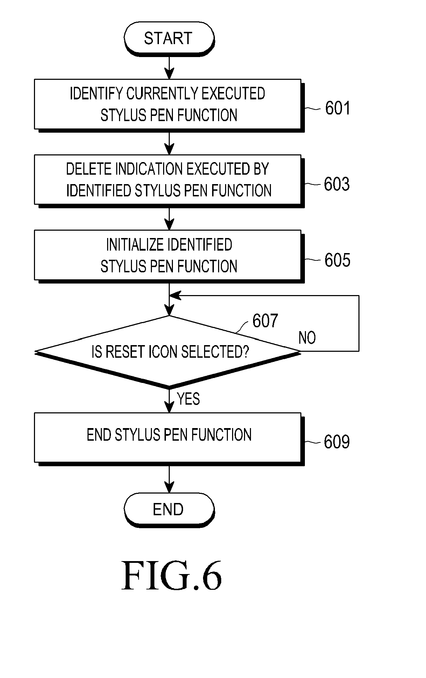

FIG. 6 is a flowchart of performing the reset function in the portable terminal according to the exemplary embodiment of the present invention. Hereinafter, an operation of performing the reset function by the portable terminal will be described with reference to FIG. 6.

In step 601, the controller 101 identifies a currently executed stylus pen function among the highlighter function, the colored pencil function, and the capture function, and then proceeds to step 603. For example, when the currently executed stylus pen function is the capture function, the controller 101 may identify that the currently executed stylus pen function is the capture function. Further, in step 603, the controller 101 deletes an indication of the capture area, displayed on the screen, which is generated by the execution of the identified stylus pen function and then proceeds to step 605. For example, when the identified stylus pen function is the capture function, the controller 101 may delete a capture area from the image, with the capture area being the indication generated for the capture.

Further, in step 605, the controller 101 initializes the identified stylus pen function, executes the initialized stylus pen function, and then proceeds to step 607. For example, when the identified stylus pen function is the capture function, the controller 101 may initialize and then execute the capture function. In addition, in step 607, the controller 101 identifies whether the reset icon is selected. As a result of the identification that the reset icon is selected, the controller 101 proceeds to step 609. Otherwise, the controller 101 repeatedly performs step 607.

When performing step 609, the controller 101 ends the identified stylus pen function and then ends the reset function after step 219 in FIG. 2. For example, when the identified stylus pen function is the capture function, the controller 101 may end the capture function.

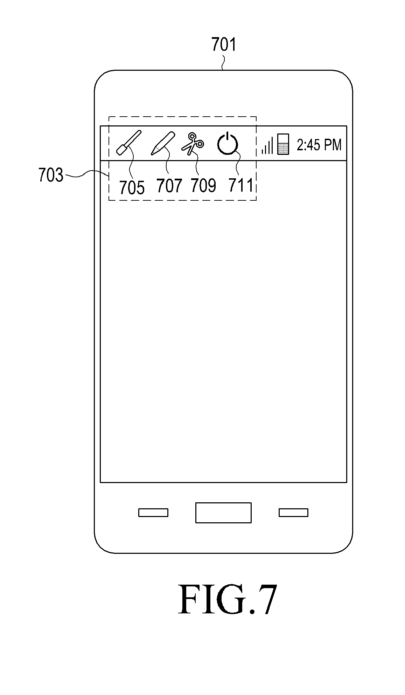

FIG. 7 illustrates a screen displaying stylus pen functions as icons in the portable terminal according to the exemplary embodiment of the present invention.

Referring to FIG. 7, a screen 701 displayed by the display unit 103 in FIG. 1 displays icons 703 corresponding to stylus pen functions. Here, the icons 703 include a highlighter icon 705 corresponding to the highlighter function, a colored pencil icon 707 corresponding to the colored pencil function, a capture icon 709 corresponding to the capture function, and a reset icon 711 corresponding to the reset function.

When a stylus pen function activation condition is satisfied, the portable terminal may display the icons 703 corresponding to the stylus pen function as illustrated in the screen 701. At this time, the portable terminal may display the icons 703 on a notification bar.

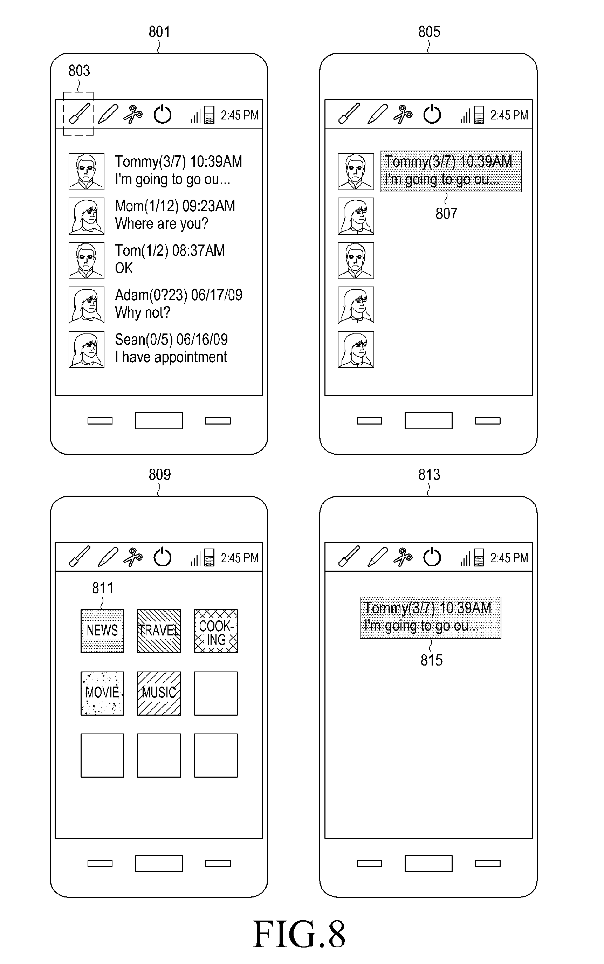

FIG. 8 illustrates screens in which the highlighter function is performed in the portable terminal according to the exemplary embodiment of the present invention.

Referring to FIG. 8, a screen 801 on the display unit 103 shows that a highlighter icon 803 is selected by the user among icons corresponding to the stylus pen functions. Further, a screen 805 shows that the highlighter function is performed and a text 807 contacted by the stylus pen is marked in a preset fluorescent color among texts displayed on the screen 805, for example, by having a different shade or color on the screen 805 compared to the colors of the remainder of the screen 805. A screen 809 shows that a category 811 corresponding to a preset highlighter is selected among a plurality of categories corresponding to a plurality of fluorescent colors. Each of the categories, such as the category 811, may have a unique color, represented by the different shadings of the categories on the screen 909. A screen 813 shows a text 815 stored in accordance with the selected category 811, for example, with the text 815 having a different shade or color on the screen 813 compared to the colors of the remainder of the screen 813.

When the highlighter icon is selected as illustrated in the screen 801, the portable terminal executes the highlighter function, and marks the text 807 contacted by the stylus pen in the preset fluorescent color as illustrated in the screen 805. Further, when it is requested by the user to store the marked text, the portable terminal stores the text marked in the preset fluorescent color. In addition, the portable terminal displays the plurality of categories corresponding to the plurality of fluorescent colors as illustrated in the screen 809. When one of the plurality of categories is selected by the user, such as the category 811, the portable terminal identifies the fluorescent color corresponding to the selected category, and displays the text corresponding to the identified fluorescent color as illustrated in screen 813.

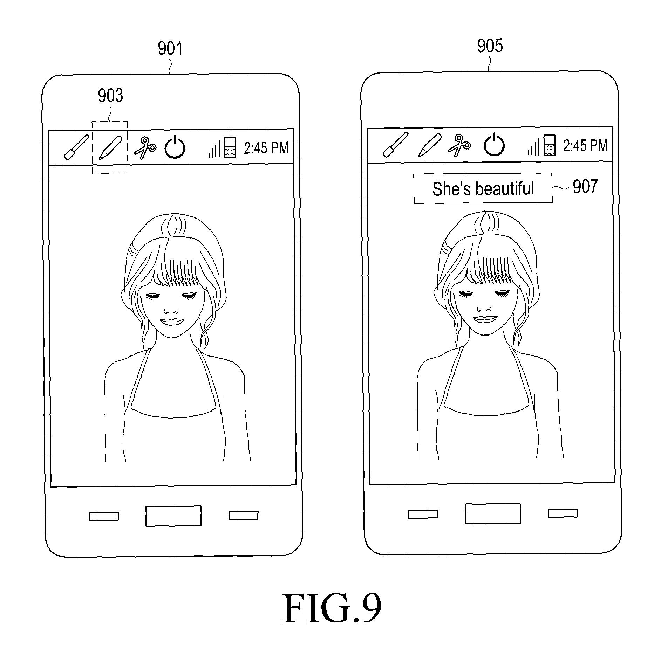

FIG. 9 illustrates screens in which the colored pencil function is performed in the portable terminal according to the exemplary embodiment of the present invention.

Referring to FIG. 9, a screen 901 on the display unit 103 shows that a colored pencil icon 903 is selected by the user among the icons corresponding to the stylus pen functions. Further, a screen 905 shows that a function using the colored pencil has been performed to generate a motion trace 907 of the stylus pen which is marked in a preset colored pencil color in the image displayed on the screen 905.

When the colored pencil icon 903 is selected as illustrated in the screen 901, the portable terminal executes the colored pencil function, and marks a motion trace 907 of the stylus pen in the preset colored-pencil color as illustrated in the screen 905.

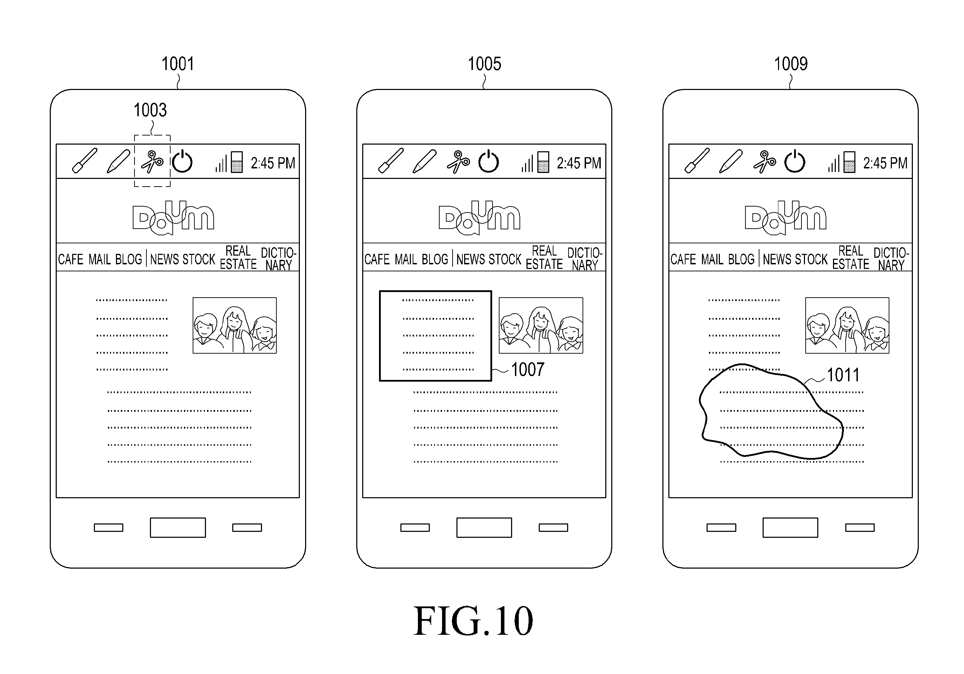

FIG. 10 illustrates screens in which the capture function is performed in the portable terminal according to the exemplary embodiment of the present invention.

Referring to FIG. 10, a screen 1001 on the display unit 103 shows that a capture icon 1003 is selected by the user among the icons corresponding to the stylus pen functions. Further, a screen 1005 shows that the capture function is performed and a capture area 1007 in a rectangular form, as an indication of the capture area 1007, is displayed in the image displayed on the screen 1005. In addition or alternatively to the capture function using a rectangular form, a screen 1009 shows that the capture function is performed and a capture area 1011 generated by a motion trace of the stylus pen is displayed in the image displayed on the screen 1009.

When the capture icon 1003 is selected as illustrated in the screen 1001, the portable terminal executes the capture function, generates the capture area 1007 or 1011 as illustrated in the screen 1005 or 1009, respectively, and stores the image included in the generated capture area.

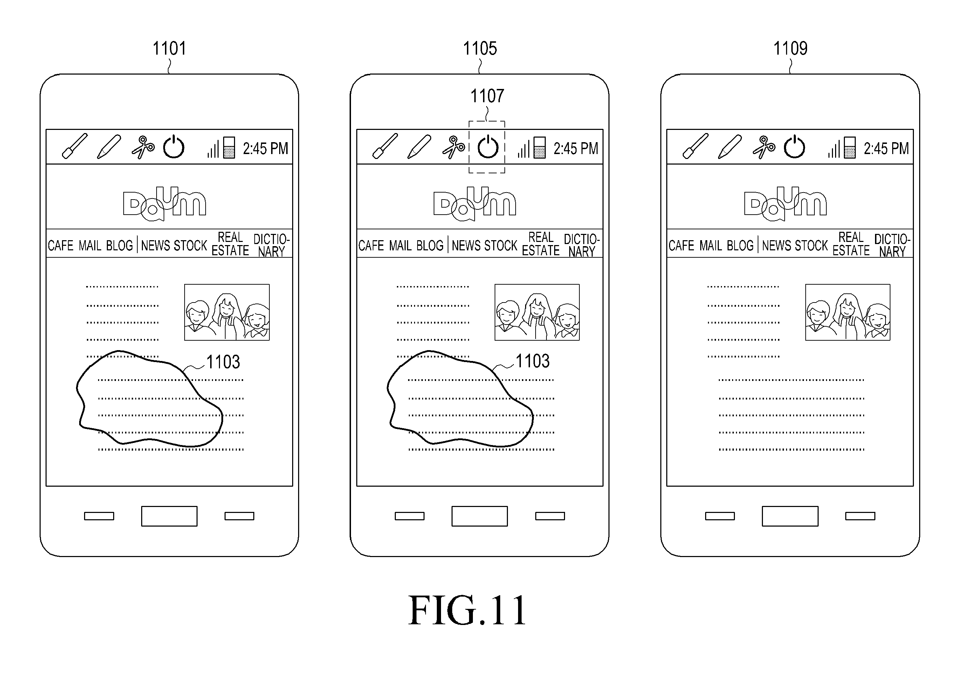

FIG. 11 illustrates screens in which the reset function is performed in the portable terminal according to the exemplary embodiment of the present invention.

Referring to FIG. 11, a screen 1101 on the display unit 103 shows that the capture function is performed and a capture area 1103 generated by a motion trace of the stylus pen is displayed in the image displayed on the screen 1101. Further, a screen 1105 shows that a reset icon 1107 is selected by the user among the icons corresponding to the stylus pen functions. In addition, a screen 1109 shows that the reset function has been performed and the captured area 1103 in the screens 1101, 1105, as the indications, has been deleted, as shown in screen 1109. However, only the capture area 1103 is deleted, while the part of the image within the captured area 1103 remains on the screen 1109 after the captured area 1103 has been removed from the screen 1109.

When the reset icon 1107 is selected as illustrated in screen 1105, the portable terminal executes the reset function and deletes a mark or outline, as the indication delimiting the captured area 1103, and displayed by the stylus pen function as illustrated in the screen 1109. For example, when the identified stylus pen function is the capture function, the portable terminal may delete the capture area 1103 generated for the capture from the image.

Through such operations, the present invention displays icons corresponding to stylus pen functions on the screen, so that it is possible to easily activate the stylus pen functions and easily use the stylus pen functions.

The present invention can be implemented as a computer readable code in a computer readable recording medium. The computer readable recording medium includes all types of recording devices storing data which can be read by a computer system. For example, the recording medium includes a ROM, a RAM, an optical disk, a magnetic tape, a floppy disk, a hard disk, a non-volatile memory and the like, and includes a medium implemented in a form of a carrier wave (for example, transmission through the Internet) as well. Further, the computer readable recording medium is distributed to the computer system connected through a network, in which computer readable code may be stored and executed in a distributed manner.

The above-described apparatus and methods according to the present invention can be implemented in hardware or firmware, or as software or computer code, or combinations thereof. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

Although the detailed embodiments of the portable terminal, such as a mobile communication terminal have, been discussed in the description of the present invention, various modifications can be made without departing from the scope of the present invention. Therefore, the real protection boundary of the present invention is not limited to the above-described embodiments but defined by the appended claims and the equivalents thereof.

## Claims

1. An apparatus for editing an image in a portable terminal, the apparatus **characterized by**:
a memory unit (105),
a display unit (103), and
a controller (101) for displaying (203) one or more icons (703, 705, 707, 709, 711, 803, 903, 1003, 1107) indicating stylus pen functions in the display unit (103), displaying (303) a text (807, 815) selected by a stylus pen in the image in a preset fluorescent color when a highlighter icon (705, 803) corresponding to a highlighter function is selected, and storing (309) the displayed text in the memory unit (105) in accordance with the preset fluorescent color.

2. The apparatus of claim 1, **characterized in that**, when a preset stylus pen function activation condition is satisfied for a selected stylus pen function, the controller displays an icon of the one or more icons (703, 705, 707, 709, 711, 803, 903, 1003, 1107) which is associated with the activation of the selected stylus pen function, and the preset stylus pen function activation condition includes a case where an image display event is generated or a stylus pen application is executed.

3. The apparatus of claim 1, **characterized in that**, when the highlighter icon (705, 803) is selected (205) while the highlighter function is performed, the controller (101) changes (313) the preset fluorescent color according to a preset order.

4. The apparatus of claim 1, **characterized in that**, when a colored pencil icon (707, 903) corresponding to a colored pencil function is selected (209), the controller (101) marks (403) a motion trace of the stylus pen on the image in a preset colored pencil color, and stores (407) the image with the marked motion trace when the controller (101) is requested to store the image.

5. The apparatus of claim 4, **characterized in that**, when the colored pencil icon (707, 903) is selected (209) while the colored pencil function is performed, the controller (101) changes (411) the preset colored pencil color according to a preset order.

6. The apparatus of claim 1, **characterized in that**, when a capture icon (709, 1003) corresponding to a capture function is selected (213), the controller (101) sets a capture area (1007, 1011, 1103) in the image according to a preset capture mode and stores (505) at least a part of the image included in the set capture area (1007, 1011, 1103).

7. The apparatus of claim 1, **characterized in that**, when a reset icon (711, 1107) corresponding to a reset function is selected (217), the controller (101) initializes (605) a currently executed stylus pen function.

8. A method of editing an image in a portable terminal, the method **characterized by**:
displaying (203) one or more icons (703, 705, 707, 709, 711, 803, 903, 1003, 1107) indicating stylus pen functions;
when a highlighter icon (705, 803) corresponding to a highlighter function is selected among the displayed one or more icons (703, 705, 707, 709, 711, 803, 903, 1003, 1107), displaying (303) a text (807, 815) selected by a stylus pen in the image in a preset fluorescent color; and
storing (309) the displayed text in accordance with the preset fluorescent color.

9. The method of claim 9, **characterized in that** displaying the one or more icons (703, 705, 707, 709, 711, 803, 903, 1003, 1107) comprises displaying an icon of the one or more icons (703, 705, 707, 709, 711, 803, 903, 1003, 1107) which is associated with the activation of the selected stylus pen function when a preset stylus pen function activation condition is satisfied for a selected stylus pen function, and the preset stylus pen function activation condition includes a case where an image display event is generated and a case where a stylus pen application is executed.

10. The method of claim 9, **characterized by**:
changing (313) the preset fluorescent color according to a preset order when the highlighter icon (705, 803) is selected (205) while the highlighter function is performed.

11. The method of claim 9, **characterized by**:
marking (403) a motion trace of the stylus pen on the image in a preset colored pencil color when a colored pencil icon (707, 903) corresponding to a colored pencil function is selected (209) and storing (407) the image with the marked motion trace when a request to store the image is received.

12. The method of claim 12, **characterized by**:
changing (411) the preset colored pencil color according to a preset order when the colored pencil icon (707, 903) is selected (209) while the colored pencil function is performed.

13. The method of claim 9, **characterized by**:
setting a capture area (1007, 1011, 1103) in the image according to a preset capture mode when a capture icon (709, 1003) corresponding to a capture function is selected and storing (505) at least a part of the image included in the set capture area (1007, 1011, 1103).

14. The method of claim 9, **characterized by**:
initializing (605) a currently executed stylus pen function when a reset icon (711, 1107) corresponding to a reset function is selected (217).
